# EUROPEAN PATENT APPLICATION

(11) **EP 4 797 130 A1**
(43) Date of publication of application: **26.08.2026**
(21) Application number: 26159038.4
(22) Date of filing: 17.02.2026
(51) Int. Cl.: G06F 21/32, G06F 21/55, G10L 15/26, G10L 17/26, H04L 9/40

(54) **SYSTEM FOR VOICE ANALYSIS TO PREVENT SOCIAL ENGINEERING**

(30) Priority: 19.02.2025 US 202519057599
(71) Applicant: CrowdStrike Inc., Sunnyvale, CA 94086 (US)
(72) Inventor: MEYERS, Adam, Sunnyvale, 94086 (US); MOMBURG, Mark, Sunnyvale, 94086 (US); STEIN, Stefan, Sunnyvale, 94086 (US); EBKE, Hans-Christian, Sunnyvale, 94086 (US); WALD, Arnaud, Sunnyvale, 94086 (US)
(74) Representative: Murgitroyd & Company

(57) **Abstract**

The present disclosure provides techniques for real-time voice analysis to prevent social engineering that can be integrated with existing communication systems . A processing device generates, via an AI model, a representation of a voice of a speaker based on an audio recording comprising the voice of the speaker. The processing device determines, based on the audio recording, an identifier of the speaker. The processing device executes, based on the representation of the voice and the identifier of the speaker, a search over a database comprising cases for known threat campaigns and profiles for verified users. The processing device outputs, based on search results for the search, an indication as to whether the speaker is part of a threat campaign and a likelihood that a purported identity of the speaker matches an actual identity of the speaker.

## Description

### TECHNICAL FIELD

Aspects of the present disclosure relate to cybersecurity, and more particularly, to a system for real-time voice analysis to prevent social engineering.

### BACKGROUND

Artificial intelligence (AI) is a field of computer science that encompasses the development of systems capable of performing tasks that typically require human intelligence. Machine learning is a branch of artificial intelligence focused on developing algorithms and models that allow computers to learn from data and make predictions or decisions without being explicitly programmed. Machine learning models are the foundational building blocks of machine learning, representing mathematical and computational frameworks used to extract patterns and insights from data. Large language models (LLMs), a category within machine learning models, are trained on vast amounts of text data to capture the nuances of language and context. By combining advanced machine learning techniques with enormous datasets, large language models harness data-driven approaches to achieve highly sophisticated language understanding and generation capabilities. AI models include machine learning models, large language models, and other types of models such as those based on neural networks, genetic algorithms, expert systems, Bayesian networks, reinforcement learning, decision trees, or combination thereof.

Cybersecurity refers to the practice of protecting computer systems, networks, and digital assets from theft, damage, unauthorized access, and various forms of cyber threats. Cybersecurity threats encompass a wide range of activities and actions that pose risks to the confidentiality, integrity, and availability of computer systems and data. These threats can include malicious activities such as viruses, ransomware, and hacking attempts aimed at exploiting vulnerabilities in software or hardware.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example of a system for voice analysis to prevent social engineering in accordance with some aspects of the present disclosure.
FIG. 2 is a flow diagram of a method of voice analysis to prevent social engineering in accordance with some aspects of the present disclosure.
FIG. 3 is a flow diagram of a method of voice analysis to prevent social engineering in accordance with some aspects of the present disclosure.
FIG. 4 is a block diagram that illustrates an example of a system for voice analysis to prevent social engineering in accordance with some aspects of the present disclosure.
FIG. 5 illustrates a diagrammatic representation of a machine in an example form of a computer system that may perform one or more of the operations described herein in accordance with some aspects of the present disclosure.

### DETAILED DESCRIPTION

Cybersecurity attacks may include social engineering attacks. In a social engineering attack, an attacker may obtain information about a user from public sources and/or private sources. For instance, the attacker may obtain a name of the user, a job title of the user, information about acquaintances of the user, etc. The attacker may then use the information about the user to persuade a person or persons to perform actions or divulge information. In an example, an attacker may impersonate the user using the information in a call to an information technology (IT) employee in which the attacker requests a password reset for an account of the user. If the social engineering attack succeeds, the password of the account may be reset and the attacker may gain access to an account of the user and obtain confidential information from the account.

Computer-implemented approaches for mitigating or preventing social engineering attacks suffer from various deficiencies. For example, existing approaches may not be capable of leveraging information about social engineering threat campaigns conducted across different organizations in order to prevent social engineering attacks. Furthermore, existing approaches may focus on utilizing a combination of different approaches in order to detect and mitigate a social engineering attack.

The present disclosure addresses the above-noted and other deficiencies by using a processing device to perform voice analysis to prevent social engineering. The processing device may generate a vectorized representation of a voice of a speaker in an audio call between a first device and a second device. The processing device may also generate a transcription of the audio call. The processing device may execute a search over a database including cases for known threat campaigns and profiles of verified users. The processing device may determine whether the speaker is part of a threat campaign based on search results for the search. The processing device may output an indication as to whether the speaker is part of a threat campaign based on the determination.

In an example, a processing device generates, via an AI model, a representation of a voice of a speaker based on an audio recording comprising the voice of the speaker. The processing device determines, based on the audio recording, an identifier of the speaker. The processing device executes, based on the representation of the voice and the identifier of the speaker, a search over a database comprising cases for known threat campaigns and profiles for verified users. The processing device outputs, based on search results for the search, an indication as to whether the speaker is part of a threat campaign and a likelihood that a purported identity of the speaker matches an actual identity of the speaker.

As discussed herein, the present disclosure provides an approach that improves the operation of a computer system by reducing computing resources used in determining whether an audio call (i.e., an audio recording) is associated with a social engineering threat campaign. For instance, the technologies described herein provide for an end-to-end social engineering detection mechanism that can be deployed in a variety of devices and contexts. In addition, the present disclosure provides an improvement to the technological field of cybersecurity by improving detections of attempted social engineering attacks. For instance, via executing a search over a database comprising cases for known threat campaigns and profiles for verified users and outputting an indication as to whether a speaker is part of a threat campaign based on the search results, the present disclosure may improve detections of attempted social engineering attacks compared to approaches that do not utilize such a search.

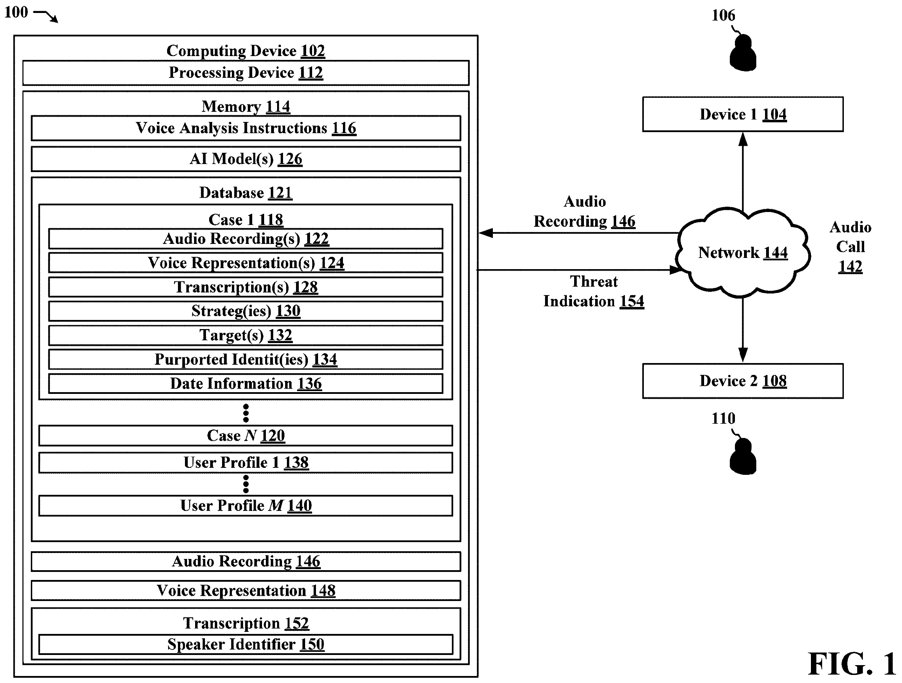

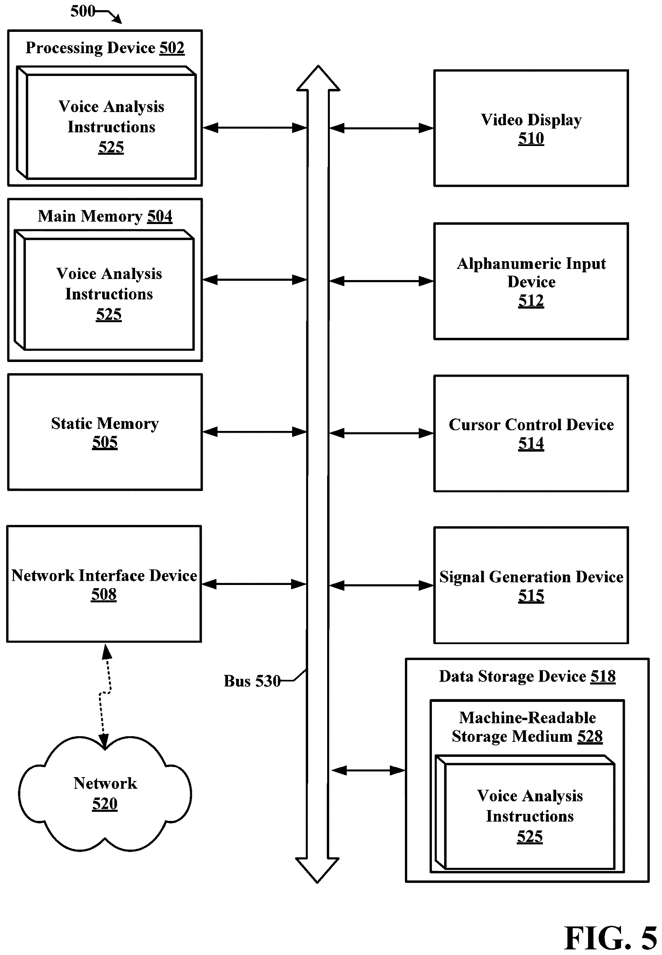

FIG. 1 is a block diagram 100 that illustrates an example of a system for voice analysis to prevent social engineering in accordance with some aspects of the present disclosure. The system includes a computing device 102, a first device 104, and a second device 108. In an example, the first device 104 may be operated by a first user 106 and the second device 108 may be operated by a second user 110. In an example, the first device 104 may be or include a phone (e.g., a smartphone), a desktop computing device, a laptop computing device, a tablet computing device, a wearable computing device, a gaming console, and/or an extended reality (XR) device. In an example, the first device 104 may be or include the computer system 500 (shown in FIG. 5) (or a portion thereof). In an example, the first device 104 and the first user 106 may be associated with an organization. For example, the organization may be a company at which the first user 106 is employed, and the first device 104 may be issued by the company to the first user 106. In an example, the organization may be a call center. In another example, the first user 106 may be an information technology (IT) employee that is tasked with providing IT services to other employees of an organization via the first device 104. In a further example, the organization may be a government entity.

In an example, the second device 108 may be or include a phone (e.g., a smartphone), a desktop computing device, a laptop computing device, a tablet computing device, a wearable computing device, a gaming console, and/or an XR device. In an example, the second device 108 may be or include the computer system 500 (shown in FIG. 5) (or a portion thereof). In some examples, the second device 108, the second user 110, the first user 106, and the first device 104 may be associated with the (same) organization. In other examples, the first user 106 and the first device 104 may be associated with a first organization and the second user 110 and the second device 108 may be associated with a second organization, where the first organization provides services to the second organization. In some other examples, the first user 106 and the first device 104 may be associated with an organization, and the second user 110 may be a malicious actor that wishes to perform a social engineering attack on the organization. For instance, the second user 110 may be attempting to impersonate an actual employee at the organization using public and/or private information about the actual employee.

The computing device 102 includes a processing device 112 and memory 114. In an example, the computing device 102 may be or include a phone (e.g., a smartphone), a desktop computing device, a laptop computing device, a tablet computing device, a wearable computing device, a gaming console, a server computing device, a cloud computing device (e.g., a cloud server), and/or an XR device. In an example, the computing device 102 may be or include the computer system 500 (shown in FIG. 5) (or a portion thereof). The memory 114 stores voice analysis instructions 116 that, when executed by the processing device 112, causes the processing device 112 to perform voice analysis to prevent social engineering as described herein.

The computing device 102 may be associated with (e.g., belong to) an organization that provides cybersecurity services to clients. For instance, the computing device 102 may be associated with a first organization that provides cybersecurity services to a second organization associated with the first device 104 and the first user 106. The computing device 102 (e.g., via the voice analysis instructions 116) may obtain information about cybersecurity threats (e.g., social engineering attacks), create cases (e.g., a first case 118 associated with a first known threat campaign and an Nth case 120 associated with an Nth known threat campaign, where N is a positive integer greater than one (collectively "the plurality of cases 118-120")) based on the information about the cybersecurity threats, and store the plurality of cases 118-120 in a database 121 in the memory 114. In an example, the information about the cybersecurity threats may be or include audio recordings of known threat campaigns, transcriptions of the audio recordings of the known threat campaigns, published reports on the known threat campaigns, dates and/or times of the known threat campaigns, targets of the known threat campaigns, geographic regions associated with the known threat campaigns, analyst notes about the known threat campaigns, strategies associated with the known threat campaigns, and/or metadata about the known threat campaigns.

In an example, the computing device 102 (e.g., via the voice analysis instructions 116) may generate a first case 118 for a known threat campaign based on the information about the cybersecurity threats and store the first case 118 in the database 121. The first case 118 may include audio recording(s) 122 associated with the known threat campaign (or a reference to the audio recording(s) 122 associated with the known threat campaign). In an example, a known threat campaign may be or include a password reset, a multi-factor authentication reset, and/or an identity attack. In an example, the audio recording(s) 122 may be or include moving picture experts group (MPEG) audio layer 3 (MP3) files, waveform audio file format (WAV) files, advance audio coding (AAC) files, etc. In an example, the audio recording(s) 122 may have been detected as being associated with a known threat campaign by the organization associated with the computing device 102 by automated and/or non-automated means. In an example, the audio recording(s) 122 include an audio recording of a malicious attacker asking an IT employee to reset a password of a device, such as "Hi, my name is Tom and I work at the Silicon Valley office with Jim and Bob, who I think you know. I need to reset my password for my work account." In some aspects, the audio recording(s) 122 may be or include video recording(s) that include audio data and video data.

The first case 118 may include voice representation(s) 124 of speakers (e.g., malicious actors) involved in the known threat campaign associated with the first case 118. For example, the memory 114 of the computing device 102 may store AI model(s) 126 that are configured to generate the voice representation(s) 124 based on the audio recording(s) 122. In an example, the computing device 102 may provide, as input to the AI model(s) 126 (e.g., a first AI model), the audio recording(s) 122 and the AI model(s) 126 may output the voice representation(s) 124 based on the input and parameters of the AI model(s) 126. In some aspects, the computing device 102, via the AI model(s) 126 may transform the audio recording(s) 122 into a mathematical vector, where each element of the mathematical vector represents a specific characteristic of sound (e.g., frequency, amplitude, timbre, etc.). As such, the audio recording(s) 122 may include a vectorized representation(s) of voice(s) of malicious actors (human or non-human) speaking in the audio recording(s) 122, where the vectorized representation(s) comprise a plurality of values. In some aspects, the voice representation(s) 124 may serve as unique "fingerprints" for speaker(s) in the audio recording(s) 122.

In an example, an audio recording in the audio recording(s) 122 may include multiple voices of multiple speakers (e.g., a first voice for a first speaker, a second voice for a second speaker, etc.). The computing device 102, via the AI model(s) 126 (e.g., a second AI model), may extract each voice from the audio recording, that is, the computing device 102 may identify portions of the audio recording corresponding to each speaker. The computing device 102, via the AI model(s) 126 (e.g., via the first AI model), may then generate the voice representation(s) 124 for each speaker based on the extracted voices.

The first case 118 may include transcription(s) 128 of the audio recording(s) 122 (or a reference to the transcription(s) of the audio recording(s) 122). For example, the memory 114 of the computing device 102 may provide, as input to the AI model(s) 126 (e.g., a third AI model), the audio recording(s) 122, and the AI model(s) 126 may output, based on the input and parameters of the AI model(s) 126, the transcription(s) 128 of the audio recording(s) 122. In an example, the transcription(s) 128 may include computer-readable text that includes "Hi, my name is Tom and work at the Silicon Valley office with Jim and Bob, who I think you know. I need to reset my password for my work account."

The first case 118 may include strateg(ies) 130 associated with the known threat campaign. The strateg(ies) 130 may be based on published reports on the known threat campaign, analyst notes, or an analysis of the audio recording(s) 122 and/or the transcription(s) 128. In some aspects, the computing device 102 may generate, via the AI model(s) 126 (e.g., a fourth AI model, such as an LLM), the strateg(ies) 130 associated with the known threat campaign based on the audio recording(s) 122 and/or the transcription(s) 128 and parameters (e.g., weights) of the AI model(s) 126. In an example, the strateg(ies) 130 may indicate that the known threat campaign is associated with an attacker pretending to be an employee of a company and requesting a password reset while making reference to individuals (e.g., "Jim and Bob") who an IT employee (e.g., the first user 106) knows in order to gain the trust of the IT employee. In some aspects, the strateg(ies) 130 may include a pattern of the known threat campaign as determined via an analyst and/or the AI model(s) 126. In an example, the pattern may include an introduction of the attacker, a request to perform a particular computer-implemented activity (e.g., a password reset), and social engineering information (e.g., public and/or private information about an individual that the attacker is attempting to impersonate).

The first case 118 may include target(s) 132 of the known threat campaign. In some aspects, the target(s) 132 may be added to the first case 118 by an analyst. In some aspects, the target(s) may be added to the first case 118 via the AI model(s) 126 based on the audio recording(s), the transcription(s) 128, and/or other information. The target(s) 132 may include particular organizations (e.g., particular companies, particular governments, particular government entities, etc.), types of organizations (e.g., insurance companies, technology companies, etc.), geographic regions (e.g., particular states, particular countries, particular provinces, etc.) that are targeted, and/or types of users (e.g., call center employees, IT employees, etc.). In the example above, the target(s) 132 may indicate that the known threat campaign targets IT employees at an insurance company.

The first case 118 may include purported identit(ies) 134 of actors involved in the known threat campaign. In some aspects, the purported identit(ies) 134 may be added to the first case 118 by an analyst. In some aspects, the purported identit(ies) 134 may be added to the first case 118 via the AI model(s) 126 based on the audio recording(s), the transcription(s) 128, and/or other information. In the example above, the purported identit(ies) 134 may include "Tom" as the attacker is claiming to be "Tom."

The first case 118 may include date information 136 about the known threat campaign. In some aspects, the date information 136 may be added to the first case 118 by an analyst. In some aspects, the date information 136 may be added to the first case 118 via the AI model(s) 126 based on the audio recording(s), the transcription(s) 128, and/or other information. In an example, the date information 136 may indicate day(s) of the week at which the known threat campaign occurred, time(s) of the day at which the known threat campaign occurred, frequencies at which the known campaign occurred, etc.

The database 121 may also include a first user profile 138 for a user and an Mth user profile 140 for another user, where M is a positive integer greater than one (collectively "the plurality of user profiles 138-140"). The plurality of user profiles 138-140 may be verified user profiles for users that are associated with an organization. In an example, the plurality of user profiles 138-140 may include an identifier for a verified user, an employment title of the verified user, a representation of a voice of the verified user (e.g., generated in a manner similar or identical to that of the voice representation(s) 124), an audio recording of the verified user in which the verified user speaks, and/or a transcription of the audio recording of the verified user. In an example in which the second user 110 is an actual employee of an organization, the plurality of user profiles 138-140 may include a user profile (e.g., the *M*th user profile 140) for the second user 110. The computing device 102 may generate the user profile for the second user 110 as part of an on-boarding process for the second user 110 and/or as the second user 110 performs duties for the organization.

It is contemplated that the first device 104 and the second device 108 engage in an audio call 142 via a network 144. In an example, the network 144 may be or include the Internet, a local area network (LAN), a wireless local area network (WLAN), and/or a cellular network. In an example, the second device 108 may receive input (e.g., a phone number of the first device 104) from the second user 110 that causes the second device 108 to call the first device 104. The first device 104 may present a notification to the first user 106 that is indicative of the audio call 142. For instance, the first device 104 may ring and/or present a visual indicator to the first user 106 indicating that the audio call 142 is incoming. The first device 104 may receive input from the first user 106 indicating that the first user 106 accepts the audio call 142. The first device 104 and the second device 108 may establish the audio call 142 responsive to the audio call 142 being accepted by the first device 104.

Subsequent or concurrently with the audio call 142 being established, the first user 106 or an automated system may inform the second user 110 that the audio call 142 is being recorded. As such, the first device 104 (or another system/device (e.g., the computing device 102)) may begin to record the audio call 142 to generate an audio recording 146 of the audio call 142. In an example, the second user 110 says the following during the audio call 142: "Hi, my name is Tom, and I work at the San Francisco office with Alice and Eve, who I think you know. I need to reset my password for my work account."

The computing device 102 may obtain (e.g., as the audio call 142 is on-going) the audio recording 146 via the network 144 from the first device 104 (or from another device). For instance, the first device 104 (or another device) may transmit the audio recording 146 to the computing device 102 and the computing device 102 may receive the audio recording 146 from the computing device 102. In some aspects, the audio recording 146 is an audio stream that is continually transmitted to the computing device 102 in a live manner as the audio call is on-going. In some aspects, the computing device 102 may obtain the audio recording 146 automatically. In some other aspects, the first device 104 may present a user interface element on a display of the first device 104. If the first user 106 begins to suspect that the second user 110 is not who they claim to be, the first device 104 may receive a selection of the user interface element. Responsive to receiving the selection of the user interface element, the first device 104 may transmit (or begin to transmit) the audio recording 146 (or an audio stream) to the computing device 102.

The computing device 102 may generate, via the AI model(s) 126 (e.g., via the first AI model), a voice representation 148 of a voice of the second user 110 in a manner similar or identical to that described above with respect to the voice representation(s) 124. For instance, the computing device 102 may provide the audio recording 146 as input to the AI model(s) 126 (e.g., as input to the first AI model) and the computing device 102 may obtain the voice representation 148 as an output of the AI model(s) 126 based on the input and parameters of the AI model.

The computing device 102 may determine, based on the audio recording 146, a speaker identifier 150 (i.e., an identifier for a speaker, such as an identifier for the second user 110) based on the audio recording 146. For instance, the computing device 102, via the AI model(s) 126 (e.g., the second AI model), may generate a transcription 152 of the audio recording 146. The computing device 102 may determine the speaker identifier 150 based on the transcription 152. In some aspects, the computing device 102 may identify other relevant indications from the transcription 152 other than the speaker identifier 150. For instance, the computing device 102 may identify heavy breathing and/or background noise from the transcription 152. The computing device 102 may utilize the other relevant indications to determine whether the second user 110 is part of a threat campaign and/or whether the second user 110 is who they purport themselves to be.

The computing device 102 may execute a search (or searches) over the database 121 based on the voice representation 148 and/or the speaker identifier 150 (and/or the transcription that includes the speaker identifier 150). In some aspects, the computing device 102 may execute the search over the plurality of cases 118-120 (or a portion of the plurality of cases 118-120). In some aspects, the computing device 102 may execute the search over a portion of a case in the plurality of cases 118-120. In some aspects, the computing device 102 may execute the search over the plurality of user profiles 138-140 (or a portion of the plurality of user profiles 138-140). In some aspects, the computing device 102 may execute the search over a portion of a user profile in the plurality of user profiles 138-140. In some aspects, the computing device 102 may execute the search over the plurality of cases 118-120 and the plurality of user profiles 138-140.

The computing device 102 may obtain search results for the search. The search results may be indicative of whether the speaker (i.e., the second user 110) is associated with a threat campaign. As such, the computing device 102 may determine whether the speaker (i.e., the second user 110) is or is not associated with a threat campaign based on search results for the search and/or a likelihood that a purported identity of the second user 110 (e.g., as represented by the second user 110 during the audio call 142) matches an actual identity of the second user 110. In one example, the search results may indicate that the voice representation 148 corresponds to a voice representation in the voice representation(s) 124, and as such, the second user 110 is likely part of the threat campaign associated with the first case 118. For instance, the computing device 102 may compute a similarity metric (e.g., a distance in a vector space) between the voice representation 148 and the voice representation in the voice representation(s) 124. If the similarity metric satisfies threshold criteria (e.g., if the similarity metric is less than a threshold distance in the vector space), the computing device may determine that the second user 110 is likely part of the threat campaign associated with the first case 118. In another example, the search results may indicate that the voice representation 148 corresponds to a voice representation in the first user profile 138, and as such, the second user 110 is likely not part of a threat campaign. For instance, the computing device 102 may compute a similarity metric (e.g., a distance in a vector space) between the voice representation 148 and a voice representation in the first user profile 138. If the similarity metric satisfies threshold criteria (e.g., if the similarity metric is less than a threshold distance in the vector space), the computing device may determine that the second user 110 is likely not part of the threat campaign.

Additionally or alternatively, the computing device 102 may determine whether or not the second user 110 is part of a threat campaign based on factors other than the voice representation 148. For instance, the computing device 102 may compare the speaker identifier 150 to the purported identit(ies) 134 in the case. If the computing device 102 determines that the speaker identifier 150 matches a purported identity in the purported identit(ies) 134, the computing device 102 may determine that the second user 110 is likely part of a threat campaign. In another example, the computing device 102 may determine, via the AI model(s) 126, a strategy of the audio call 142 based on the transcription 152. If the strategy of the audio call 142 (e.g., a pattern of the audio call 142) matches one or more of the strateg(ies) 130, the computing device 102 may determine that the second user 110 is likely part of a threat campaign. In some aspects, the computing device 102 may determine whether or not the second user 110 is part of a threat campaign based on a comparison of a date and/or a time of the audio call 142 with the date information 136. In some aspects, the computing device 102 may obtain information about the first user 106, the first device 104, and/or an organization associated with the first user 106 and the first device 104. The computing device 102 may determine whether or not the second user 110 is part of a threat campaign based on a comparison of the information about the first user 106, the first device 104, and/or the organization associated with the first user 106 and the first device 104 with the target(s) 132 in the first case 118.

In some aspects, the AI model(s) 126 may include an AI model trained to detect generative AI technology in audio recordings. The computing device 102 may input the audio recording 146 into the AI model, and the AI model may output an indication as to whether or not the audio recording is associated with generative AI technology based on the input and parameters of the AI model. The computing device 102 may determine whether or not the second user 110 is part of a threat campaign based on the output.

In some aspects, the search results for the search of the database 121 may include a plurality of speaker candidates. The plurality of speaker candidates may be associated with the plurality of cases 118-120 and/or the plurality of user profiles 138-140. The computing device 102 may assign certainty values to each of the plurality of speaker candidates based on various metrics (e.g., a similarity metric as described above), where a certainty value for a speaker candidate is indicative of a likelihood that the speaker candidate is the second user 110. The computing device 102 may cause identifiers for the plurality of speaker candidates and their corresponding certainty values to be presented on the first device 104 to the first user.

Responsive to determining whether the second user 110 is part of a threat campaign, the computing device may output an indication that indicates whether the second user 110 is part of the threat campaign. For instance, the computing device 102 may transmit a threat indication 154 to the first device 104 based on the determination. The threat indication 154 may indicate whether the second user 110 is likely part of a threat campaign or is likely not part of a threat campaign and/or a likelihood that a purported identity of the second user 110 (e.g., as represented by the second user 110 during the audio call 142) matches an actual identity of the second user 110. In some aspects, the threat indication may indicate whether the second user is likely part of a threat campaign, is not likely part of a threat campaign, or that the computing device 102 was unable to determine whether the second user 110 was part of the threat campaign (e.g., due to the voice representation 148 and/or the transcription 152 not corresponding to any of the plurality of cases 118-120 or the plurality of user profiles 138-140). The first device 104 may present the threat indication 154 to the first user 106 (e.g., on a display, via a speaker, etc.). In some aspects, if the threat indication 154 indicates that the second user 110 is likely part of a threat campaign, the threat indication 154, when received by the first device 104, may cause the first device 104 to automatically end the audio call 142 with the second device 108.

When the computing device 102 determines that the second user 110 is likely part of a threat campaign, the computing device 102 may update the database 121 based on the audio recording 146, the voice representation 148, the transcription 152, and/or the speaker identifier 150. For instance, the computing device 102 may determine that the audio call 142 is associated with a known threat campaign corresponding to the first case 118. The computing device 102 can add the audio recording 146, the voice representation 148, the transcription 152, and other information (e.g., a date and time of the attack) to the first case 118 in the database 121.

Although the AI model(s) 126 and the database 121 (including the plurality of cases 118-120 and the plurality of user profiles 138-140) are described above as being stored in the memory 114 of the computing device 102, other possibilities are contemplated. In some aspects, the AI model(s) 126 and/or the database 121 may be stored in other data storage (e.g., disk storage, such as a hard disk drive (HDD), a solid-state drive (SSD), etc.) accessible to the computing device 102.

Although the AI model(s) 126 are described above as being included in the memory 114 of the computing device 102, other possibilities are contemplated. In some aspects, some or all of the AI model(s) 126 are hosted at a remote location (e.g., at a cloud server). In such aspects, the computing device 102 may transmit first data (e.g., the audio recording(s) 122, the transcription(s) 128, etc.) to the remote location (e.g., the cloud server), the AI model(s) 126 may process the first data, and the computing device 102 may receive second data (e.g., the voice representation(s) 124, the strateg(ies) 130, etc.) from the remote location (e.g., the cloud server) based on the first data.

Although the computing device 102 has been described above as being separate from the first device 104, other possibilities are contemplated. In some aspects, the computing device 102 may be or include the first device 104 (or a portion thereof) or the first device 104 may be or include the computing device 102 (or a portion thereof). In such aspects, the first device 104 may perform some or all of the functionality described herein pertaining to performing voice analysis to prevent social engineering and/or the computing device 102 may engage in the audio call 142 with the second device 108. In such aspects, the computing device 102 may be operated by the first user 106.

Although the description herein has focused on audio calls (e.g., the audio call 142), it is to be understood that the concepts herein are equally applicable to video calls that include both audio data and video data, that is, the systems and methodologies for voice analysis described herein may be applied to video calls as well as audio calls.

Although the first device 104 and the second device 108 are described above as being operated by the first user 106 and the second user 110, other possibilities are contemplated. In some aspects, the first device 104 and/or the second device 108 may be operated without users. For instance, the second device 108 may be programmed to conduct a social engineering attack without the use of a human on the audio call and/or the first device 104 may be an automated system (e.g., an automated help line) that provides services to users. The computing device 102 may perform voice analysis to prevent social engineering as described herein without being used by the first user 106.

In some aspects, the AI model(s) 126 (or a portion of the AI model(s) 126) may be pre-trained models. In some aspects, the computing device 102 may train the AI model(s) 126 based on training data (e.g., audio recordings) to perform their respective functionality described herein.

In some aspects, the computing device 102 may receive data from a government computing system, where data includes information on nation state social engineering attacks (i.e., social engineering attacks sponsored by a nation state). In such aspects, the computing device 102 may additionally determine whether the second user 110 is part of a threat campaign based on the data from the government computing system.

As modern cybersecurity tools continue to evolve, adversaries are moving towards social engineering attacks to gain access to systems, computing devices, networks, applications, etc. remotely (e.g., in order to perform password resets and identity attacks). In an example, an attacker may call a help desk. The attacker may have access to open source intelligence about a user. The attacker may pretend to be the user in order to request account changes. Other areas may suffer from similar attacks including various types of fraud, business email compromise, etc.

In some aspects, a system that can identify individual voices and separate them is described herein. Once a conversation is dissected into unique voices, a machine learning algorithm may match voice(s) to known sample(s) of voice(s). Probable matches are identified with a confidence scoring. The known samples can be created for known identities (e.g., employees allowing a helpdesk analyst to assess that they are talking to an individual who is who they purport themselves to be). Additionally, when suspicious voices are identified, the suspicious voices can be tagged in order to allow helpdesk staff to prevent other members from falling victim. Additionally, cases can be created to monitor for attempted social engineering activities. Additional features described herein may include algorithms to identify voice cloning technology using generative AI tools to ensure further security against social engineering.

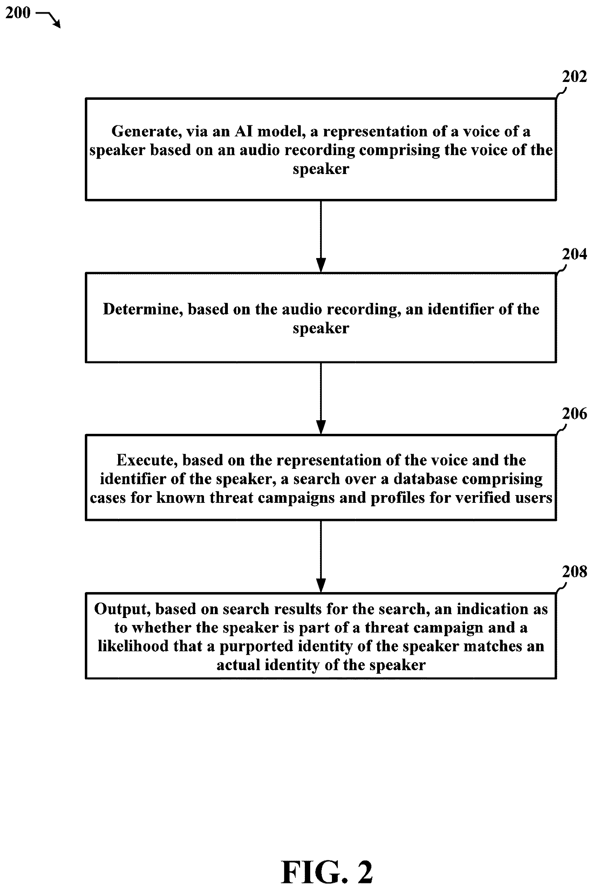

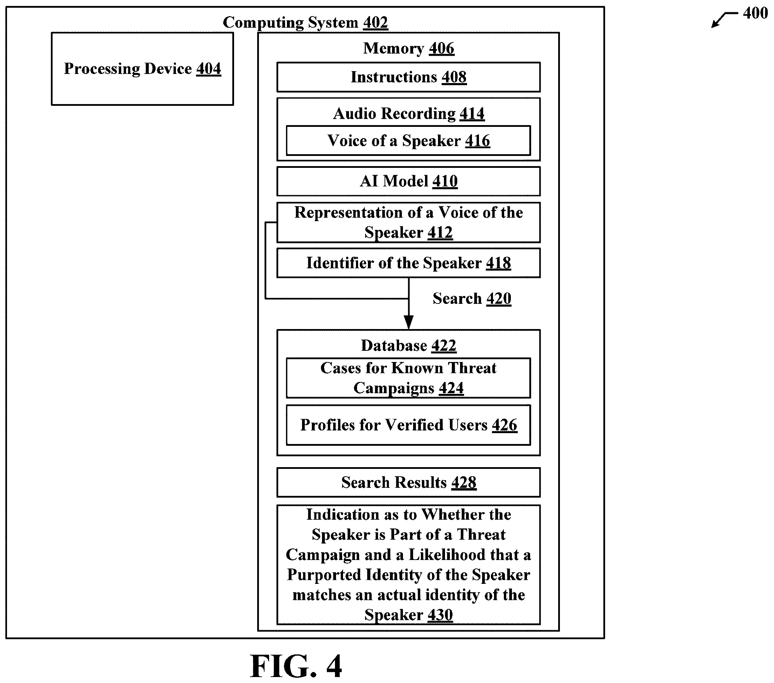

FIG. 2 is a flow diagram 200 of a method for voice analysis to prevent social engineering in accordance with some aspects of the present disclosure. The method may be performed by processing logic that may include hardware (e.g., a processing device), software (e.g., instructions running/executing on a processing device), firmware (e.g., microcode), or a combination thereof. In some aspects, at least a portion of the method may be performed by the computing device 102 (shown in FIG. 1), the processing device 112 (shown in FIG. 1), the first device 104 (shown in FIG. 1), the processing device 404 (shown in FIG. 4), the computing system 402 (shown in FIG. 4), the processing device 502 (shown in FIG. 5), the computer system 500 (shown in FIG. 5), or a combination thereof.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

At block 202, a processing device generates, via an AI model, a representation of a voice of a speaker based on an audio recording comprising the voice of the speaker. For example, the AI model may be or include the AI model(s) 126, the representation of the voice of the speaker may be or include the voice representation 148, the audio recording may be or include audio recording 146, and the speaker may be or include the second user 110. For example, the AI model may be or include the AI model 410, the representation of the voice of the speaker may be or include the representation of the voice of the speaker 412, the audio recording may be or include the audio recording 414, and the voice of the speaker may be or include the voice of the speaker 416.

At block 204, the processing device determines, based on the audio recording, an identifier of the speaker. For example, the identifier of the speaker may be or include the speaker identifier 150. In another example, the identifier of the speaker may be or include the identifier of the speaker 418.

At block 206, the processing device executes, based on the representation of the voice and the identifier of the speaker, a search over a database comprising cases for known threat campaigns and profiles for verified users. In an example, the database may be or include the database 121, the cases for the known threat campaigns may be or include the plurality of cases 118-120, and the profiles for the verified users may be or include the user profiles 138-140. In another example, the search may be or include the search 420, the database may be or include the database 422, the cases for the known threat campaigns may be or include the cases for the known threat campaigns 424, and the profiles for the verified users may be or include the profiles for the verified users 426.

At block 208, the processing device outputs, based on search results for the search, an indication as to whether the speaker is part of a threat campaign and a likelihood that a purported identity of the speaker matches an actual identity of the speaker. In an example, the indication may be or include the threat indication 154. For example, the search results for the search may be or include the search results 428 and the indication as to whether the speaker is part of a threat campaign may be or include the indication as to whether the speaker is part of a threat campaign 430.

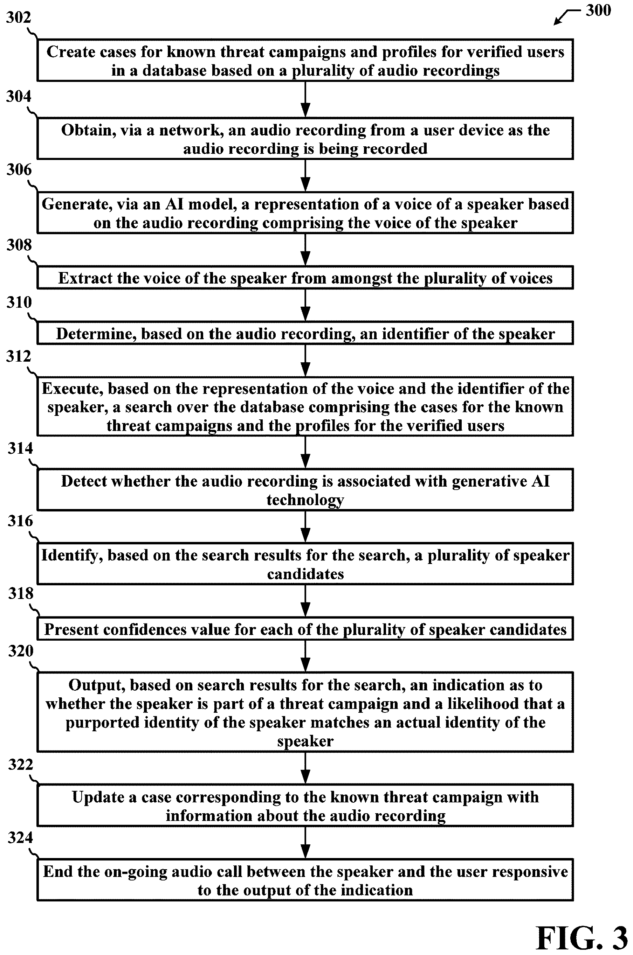

FIG. 3 is a flow diagram 300 of a method for voice analysis to prevent social engineering in accordance with some aspects of the present disclosure. The method may be performed by processing logic that may include hardware (e.g., a processing device), software (e.g., instructions running/executing on a processing device), firmware (e.g., microcode), or a combination thereof. In some aspects, at least a portion of the method may be performed by the computing device 102 (shown in FIG. 1), the processing device 112 (shown in FIG. 1), the first device 104 (shown in FIG. 1), the processing device 404 (shown in FIG. 4), the computing system 402 (shown in FIG. 4), the processing device 502 (shown in FIG. 5), the computer system 500 (shown in FIG. 5), or a combination thereof.

In some aspects, at block 302, a processing device may create cases for known threat campaigns and profiles for verified users in a database based on a plurality of audio recordings. For example, the cases may be or include the plurality of cases 118-120 and the profiles for the verified users may be or include the user profiles 138-140.

In some aspects, at block 304, the processing device may obtain, via a network, an audio recording from a user device as the audio recording is being recorded. For example, the audio recording may be or include the audio recording 146, the user device may be or include the first device 104, and the network may be or include the network 144. In another example, the audio recording may be or include the audio recording 414.

At block 306, the processing device generates, via an AI model, a representation of a voice of a speaker based on the audio recording comprising the voice of the speaker. For example, the AI model may be or include the AI model(s) 126, the representation of the voice of the speaker may be or include the voice representation 148, the audio recording may be or include audio recording 146, and the speaker may be or include the second user 110. For example, the AI model may be or include the AI model 410, the representation of the voice of the speaker may be or include the representation of the voice of the speaker 412, the audio recording may be or include the audio recording 414, and the voice of the speaker may be or include the voice of the speaker 416.

In some aspects, at block 308, the processing device may extract the voice of the speaker from amongst the plurality of voices. For example, the audio call may be or include the audio call 142, and the processing device may extract a voice of the first user 106 and/or a voice of the second user 110.

In some aspects, at block 310, the processing device determines, based on the audio recording, an identifier of the speaker. For example, the identifier of the speaker may be or include the speaker identifier 150. In another example, the identifier of the speaker may be or include the identifier of the speaker 418.

At block 312, the processing device executes, based on the representation of the voice and the identifier of the speaker, a search over the database comprising the cases for the known threat campaigns and the profiles for the verified users. In an example, the database may be or include the database 121, the cases for the known threat campaigns may be or include the plurality of cases 118-120, and the profiles for the verified users may be or include the user profiles 138-140. In another example, the search may be or include the search 420, the database may be or include the database 422, the cases for the known threat campaigns may be or include the cases for the known threat campaigns 424, and the profiles for the verified users may be or include the profiles for the verified users 426.

In some aspects, at block 314, the processing device may detect whether the audio recording is associated with generative AI technology. For example, the aforementioned aspect may correspond to the description of FIG. 1 above.

In some aspects, at block 316, the processing device may identify, based on the search results for the search, a plurality of speaker candidates. For example, the aforementioned aspect may correspond to the description of FIG. 1 above.

In some aspects, at block 318, the processing device may present confidences value for each of the plurality of speaker candidates, where a confidence value may indicate a probability that a first speaker candidate in the plurality of speaker candidates corresponds to the speaker in the audio recording. For example, the aforementioned aspect may correspond to the description of FIG. 1 above.

At block 320, the processing device may output, based on search results for the search, an indication as to whether the speaker is part of a threat campaign and a likelihood that a purported identity of the speaker matches an actual identity of the speaker. In an example, the indication may be or include the threat indication 154. For example, the search results for the search may be or include the search results 428 and the indication as to whether the speaker is part of a threat campaign may be or include the indication as to whether the speaker is part of a threat campaign 430.

In some aspects, the search results indicate that the speaker is part of a known threat campaign in the known threat campaigns, and at block 322, the processing device may update a case corresponding to the known threat campaign with information about the audio recording. For example, the processing device may update the first case 118 with information about the audio recording 146.

In some aspects, the indication may indicate that the speaker is part of the threat campaign, where the audio recording is part of an on-going audio call between the speaker and a user, and at block 324, the processing device may end the on-going audio call between the speaker and the user responsive to the output of the indication. For example, the aforementioned aspect may correspond to the description of FIG. 1 above.

In some aspects, outputting the indication may include transmitting the indication to the user device via the network as the audio recording is being recorded. For example, the aforementioned aspect may correspond to the description of FIG. 1 above.

In some aspects, a case in the cases may include at least one of: a representation of a voice of a malicious actor associated with the threat campaign, a transcription of a second audio recording associated with the threat campaign, a pattern of words associated with the threat campaign, a purported identity of the malicious actor, an identifier of an organization targeted by the threat campaign, or a set of dates associated with the threat campaign. For example, the case may be or include the first case 118.

In some aspects, generating the representation of the voice may include generating the representation based on the extracted voice. For example, the aforementioned aspect may correspond to the description of FIG. 1 above.

In some aspects, the representation of the voice of the speaker may include a vectorized representation comprising a plurality of values. For example, the aforementioned aspect may correspond to the description of FIG. 1 above.

In some aspects, the search results for the search may include a case in the cases, and outputting the indication may include outputting a first indication that the speaker is part of the threat campaign. For example, the aforementioned aspect may correspond to the description of FIG. 1 above.

In some aspects, the search results for the search may include a profile of a verified user, and outputting the indication may include outputting a first indication that the speaker is not part of the threat campaign. For example, the aforementioned aspect may correspond to the description of FIG. 1 above.

In some aspects, outputting the indication may be further based on the detection of whether the audio recording is associated with generative AI technology. For example, the aforementioned aspect may correspond to the description of FIG. 1 above.

In some aspects, generating the representation, determining the identifier of the speaker, executing the search, and outputting the indication may occur at a call center computing device, and the profiles for the verified users may include profiles for employees of the call center. For example, the computing device 102 may be or include a call center computing device.

In some aspects, outputting the indication as to whether the speaker is part of the threat campaign may include presenting the indication on a display of a computing device. For example, the aforementioned aspect may correspond to the description of FIG. 1 above.

In some aspects, the cases for the known threat campaigns may include a case for a known threat campaign, where the known threat campaign may target at least one a plurality of organizations or a government entity. For example, the aforementioned aspect may correspond to the description of FIG. 1 above.

In some aspects, a profile for a verified user in the profile for the verified users may include at least one of: an identifier for the verified user, an employment title of the verified user, a representation of a voice of the verified user, a first audio recording of the voice of the verified user, or a transcription of the first audio recording. For example, the profile may be or include the first user profile 138.

In some aspects, the known threat campaigns may include at least one of: a password reset, a multi-factor authentication reset, or an identity attack. For example, the threat campaign described in FIG. 1 may be or include at least one of: a password reset, a multi-factor authentication reset, or an identity attack.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

FIG. 4 is a block diagram 400 that illustrates an example of a computing system 402 for voice analysis to prevent social engineering in accordance with some aspects of the present disclosure. In some aspects, the computing system 402 may perform some or all of the functionality described herein. The computing system 402 includes a processing device 404 and memory 406. The memory 406 stores instructions 408 that are executed by the processing device 404. The instructions 408, when executed by the processing device 404, cause the processing device 404 to generate, via an AI model 410, a representation of a voice of a speaker 412 based on an audio recording 414 comprising the voice of the speaker 416. The instructions 408, when executed by the processing device 404, cause the processing device 404 to determine, based on the audio recording 414, an identifier of the speaker 418. The instructions 408, when executed by the processing device 404, cause the processing device 404 to execute, based on the representation of the voice of the speaker 412 and the identifier of the speaker 418, a search 420 over a database 422 comprising cases for known threat campaigns 424 and profiles for verified users 426. The instructions 408, when executed by the processing device 404, cause the processing device 404 to output, based on search results 428 for the search 420, an indication as to whether the speaker is part of a threat campaign and a likelihood that a purported identity of the speaker matches an actual identity of the speaker 430.

FIG. 5 illustrates a diagrammatic representation of a machine in the example form of a computer system 500 within which a set of instructions, for causing the machine to perform any one or more of the methodologies discussed herein for voice analysis to prevent social engineering.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, the computer system 500 may be representative of a server.

The computer system 500 includes a processing device 502, a main memory 504 (e.g., read-only memory (ROM), flash memory, dynamic random access memory (DRAM), a static memory 505 (e.g., flash memory, static random access memory (SRAM), etc.), and a data storage device 518 which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 500 may further include a network interface device 508 which may communicate with a network 520. The computer system 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 515 (e.g., an acoustic signal generation device, such as a speaker). In some embodiments, the video display unit 510, the alphanumeric input device 512, and the cursor control device 514 may be combined into a single component or device (e.g., an LCD touch screen).

The processing device 502 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. The processing device 502 may also be one or more special-purpose processing devices such as an application specific integrated circuit (ASIC), a field programmable gate array (FPGA), a digital signal processor (DSP), network processor, or the like. The processing device 502 is configured to execute voice analysis instructions 525, for performing the operations and steps discussed herein. For example, the voice analysis instructions 525 may include instructions for generating, via an AI model, a representation of a voice of a speaker based on an audio recording comprising the voice of the speaker. The voice analysis instructions 525 may include instructions for determining, based on the audio recording, an identifier of the speaker. The voice analysis instructions 525 may include instructions for executing, based on the representation of the voice and the identifier of the speaker, a search over a database comprising cases for known threat campaigns and profiles for verified users. The voice analysis instructions 525 may include instructions for outputting, based on search results for the search, an indication as to whether the speaker is part of a threat campaign and a likelihood that a purported identity of the speaker matches an actual identity of the speaker.

The data storage device 518 may include a machine-readable storage medium 528 that stores the voice analysis instructions 525 (e.g., software) embodying any one or more of the methodologies of functions described herein. The voice analysis instructions 525 may also reside, completely or at least partially, within the main memory 504 or within the processing device 502 during execution thereof by the computer system 500; the main memory 504 and the processing device 502 also constituting machine-readable storage media. The voice analysis instructions 525 may further be transmitted or received over a network 520 via the network interface device 508.

While the machine-readable storage medium 528 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "generating," "determining," "executing," "inputting," "outputting," "obtaining," "transmitting," "receiving," "extracting," "selecting," "detecting," "creating," "accessing," "identifying," "presenting," "updating," "ending," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission, or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

The present teaching may also extend to the features of one or more of the following numbered clauses:

### Clauses

1. A system, comprising:
   a processing device; and a memory to store instructions that, when executed by the processing device, cause the processing device to generate, via an artificial intelligence (AI) model, a representation of a voice of a speaker based on an audio recording comprising the voice of the speaker;
   determine, based on the audio recording, an identifier of the speaker;
   execute based on the representation of the voice and the identifier of the speaker, a search over a database comprising cases for known threat campaigns and profiles for verified users; and
   output, based on search results for the search, an indication as to whether the speaker is part of a threat campaign and a likelihood that a purported identity of the speaker matches an actual identity of the speaker.
2. The system of clause 1, wherein a profile for a verified user in the profile for the verified users comprises at least one of:
   an identifier for the verified user;
   an employment title of the verified user;
   a representation of a voice of the verified user;
   a first audio recording of the voice of the verified user; or
   a transcription of the first audio recording.
3. The system of clause 1, wherein the search results indicate that the speaker is part of a known threat campaign in the known threat campaigns, and wherein the instructions, when executed by the processing device, cause the processing device to:
   update a case corresponding to the known threat campaign with information about the audio recording.
4. A non-transitory computer readable medium, having instructions stored thereon which, when executed by a processing device, cause the processing device to:
   generate, via an artificial intelligence (AI) model, a representation of a voice of a speaker based on an audio recording comprising the voice of the speaker;
   determine, based on the audio recording, an identifier of the speaker;
   execute, by the processing device and based on the representation of the voice and the identifier of the speaker, a search over a database comprising cases for known threat campaigns and profiles for verified users; and
   output, based on search results for the search, an indication as to whether the speaker is part of a threat campaign and a likelihood that a purported identity of the speaker matches an actual identity of the speaker.
5. The non-transitory computer readable medium of clause 4, wherein the known threat campaigns include at least one of:
   a password reset;
   a multi-factor authentication reset; or
   an identity attack.
6. The non-transitory computer readable medium of clause 4, wherein the indication indicates that the speaker is part of the threat campaign, wherein the audio recording is part of an on-going audio call between the speaker and a user, and wherein the instructions, when executed by the processing device, cause the processing device further to:
   end the on-going audio call between the speaker and the user responsive to the output of the indication.
7. The non-transitory computer readable medium of clause 4, wherein the instructions, when executed by the processing device, cause the processing device further to:
   create the cases for the known threat campaigns and the profiles for the verified users in the database based on a plurality of audio recordings.

## Claims

1. A method, comprising:
generating in real-time during an ongoing communication session, via an artificial intelligence (AI) model, a representation of a voice of a speaker based on an audio recording comprising the voice of the speaker;
determining, based on the audio recording, an identifier of the speaker;
executing, by a processing device and based on the representation of the voice and the identifier of the speaker, a search over a database comprising cases for known threat campaigns and profiles for verified users; and
outputting, based on search results for the search, an indication as to whether the speaker is part of a threat campaign and a likelihood that a purported identity of the speaker matches an actual identity of the speaker.

2. The method of claim 1, further comprising:
obtaining, via a network, the audio recording from a user device as the audio recording is being recorded, wherein the outputting the indication comprises transmitting the indication to the user device via the network as the audio recording is being recorded.

3. The method of claim 1 or 2, wherein a case in the cases comprises at least one of:
a representation of a voice of a malicious actor associated with the threat campaign;
a transcription of a second audio recording associated with the threat campaign;
a pattern of words associated with the threat campaign;
a purported identity of the malicious actor;
an identifier of an organization targeted by the threat campaign; or
a set of dates associated with the threat campaign.

4. The method of any preceding claim, wherein the audio recording comprises a plurality of voices including the voice, the method further comprising:
extracting the voice of the speaker from amongst the plurality of voices, wherein the generating the representation of the voice comprises generating the representation based on the extracted voice.

5. The method of any preceding claim, wherein the representation of the voice of the speaker comprises a vectorized representation comprising a plurality of values.

6. The method of any preceding claim, wherein the search results for the search include a case in the cases, and wherein the outputting the indication comprises outputting a first indication that the speaker is part of the threat campaign.

7. The method of any preceding claim, wherein the search results for the search include a profile of a verified user, and wherein outputting the indication comprises outputting a first indication that the speaker is not part of the threat campaign.

8. The method of any preceding claim, further comprising:
detecting whether the audio recording is associated with generative AI technology, wherein the outputting the indication is further based on the detection.

9. The method of any preceding claim, wherein the determining the identifier of the speaker comprising:
generating, based on the audio recording, a transcription of the audio recording; and
identifying the identifier of the speaker based on the transcription.

10. The method of any preceding claim, further comprising:
identifying, based on the search results for the search, a plurality of speaker candidates; and
presenting confidences value for each of the plurality of speaker candidates, wherein a confidence value indicates a probability that a first speaker candidate in the plurality of speaker candidates corresponds to the speaker in the audio recording.

11. The method of any preceding claim, wherein the generating the representation, the determining the identifier of the speaker, the executing the search, and the outputting the indication occur at a call center computing device, and wherein the profiles for the verified users comprise profiles for employees of the call center.

12. The method of any preceding claim, wherein the outputting the indication as to whether the speaker is part of the threat campaign comprises presenting the indication on a display of a computing device.

13. The method of any preceding claim, wherein the cases for the known threat campaigns include a case for a known threat campaign, wherein the known threat campaign targets at least one a plurality of organizations or a government entity.

14. A system, comprising:
a processing device; and
a memory to store instructions that, when executed by the processing device, cause the processing device to carry out the method of any preceding claim.

15. A computer program which, when executed on at least one processor of a computing system is configured to carry out the method of any one of claims 1 to 13.
